# EUROPEAN PATENT SPECIFICATION

(11) **EP 4 509 979 B1**
(45) Date of publication and mention of the grant of the patent: **20.05.2026**
(21) Application number: 23791240.7
(22) Date of filing: 18.04.2023
(51) Int. Cl.: G06F 7/58

(54) **APPARATUS AND METHOD FOR GENERATING TRUE RANDOM NUMBER**
VORRICHTUNG UND VERFAHREN ZUR ERZEUGUNG ECHTER ZUFALLSZAHLEN
APPAREIL ET PROCÉDÉ DE GÉNÉRATION DE NOMBRE ALÉATOIRE RÉEL

(30) Priority: 18.04.2022 CN 202210401983; 26.07.2022 CN 202210887783
(43) Date of publication of application: 19.02.2025
(73) Proprietor: Nanjing Jugong Technology Co., Ltd., Nanjing City, Jiangsu Province 211111 (CN); Jiangsu Nanjing Zhongshan Notary Public Office, Nanjing City, Jiangsu Province 210000 (CN)
(72) Inventor: CHEN, Yin, Nanjing, Jiangsu 211102 (CN); QIAN, Qingzhao, Nanjing, Jiangsu 211102 (CN)
(74) Representative: Vesterinen, Jussi Tapio
(86) International application number: PCT/CN2023/089024
(87) International publication number: WO 2023/202585

(56) References cited:
- WO-A1-2021/188195
- CN-A- 106 339 203
- CN-A- 108 958 706
- CN-A- 108 958 706
- CN-A- 113 841 115
- CN-A- 113 885 834
- US-A- 4 786 056
- US-A1- 2003 232 641
- US-A1- 2021 373 854

## Description

### Technical Field

The present disclosure relates to the technical field of the generation of true random numbers, and in particular to that the generated true random number is used for lotteries or sweepstakes.

### Background of the Invention

The openness, fairness and impartiality of the lotteries or sweepstakes are mainly determined by the list of participants, random seeds and the algorithm for calculating the lottery results according to the random seeds and the list of participants (hereinafter referred to as the lottery algorithm). At present, the openness, fairness, justice and tamper proofness of the list of participants and the lottery algorithm can be achieved by previous evidence preserving through the blockchain. However, how to generate the true random number seeds with high credibility, low cost, ease of use and auditability intuitively, reliably, quickly, massively and neutrally is a difficult problem. For example, although the random.org website has provided a rapid and massive generation of true random numbers based on thunderstorm noise, the public cannot intuitively supervise and audit the generation process of the random numbers (worried that the platform generates random numbers selectively), which affects the openness and credibility of lotteries and sweepstakes. In the Wutong chain blockchain notarization lottery used by Suzhou notary office, an encryption card is used to generate random number seeds, the public cannot intuitively supervise and audit the generation process of random numbers (worried that the Wutong chain platform generates random numbers selectively), which affects the openness and credibility of the lotteries or sweepstakes. Although China sports lottery and China welfare lottery provide an intuitive random number generation process, due to the slow generation speed, less generated numbers and high cost, the public cannot take the initiative to visit offline at any time (worried that the live-streaming video of the lottery is recorded and faked), and no stable random number generation API (Application Programming Interface) (which is not easy to be used as random seeds in daily lottery or sweepstake activities) is provided, and then the needs of the lottery or sweepstake for the openness, credibility, ease of use and rapid generation of a large number of random seeds cannot be satisfied. Some lottery or sweepstake activities can generate the random number seeds for lottery or sweepstake by directly using block generation information of the blockchain system, which has the problems of being manipulated by miners, not intuitive enough and not credible.

### Summary of the Invention

An embodiment of the present disclosure provides an apparatus and method for generating a true random number, thus solving the technical problem that high-credibility, low-cost, easy-to-use and auditable true random number seeds cannot be generated intuitively, reliably, quickly, massively and neutrally during lottery or sweepstake.

In a first aspect, an apparatus for generating a true random number provided by an embodiment of the present disclosure is used for generating the true random number, including more than one random number generation edge nodes, and one random number generation center node. A housing of each random number generation edge node is made of a transparent material and placed in a public place, and internally includes: more than one transparent containers; one or more randomly movable objects arranged in the transparent container; an electromechanical device configured to control the randomly movable objects periodically; one or more video surveillance cameras configured to capture an internal operation situation and an external environment situation of the random number generation edge node; one or more display devices configured to display the internal operation situation and the external environment situation of the random number generation edge node; and an edge server coupled to the video surveillance camera and the display device. The edge server is configured to generate random numbers automatically and periodically based on one or more images periodically captured by the one or more video surveillance cameras, automatically identify internal and external operation situations of the random number generation edge node, send data to the random number generation center node, save video surveillance data, control the display device, and broadcast live video to the public. The randomly movable objects include ping-pong balls with numbers printed thereon. The electromechanical device includes an electric fan, a stepping motor, a switch sensor, an electrostatic removal component, and a programmable industrial control mainboard. The electromechanical device is configured to rearrange the randomly movable objects periodically and randomly by blowing air to the bottom of the transparent container. The edge server is configured to support information security auditing. The random number generation center node is configured to support the information security auditing, and the electromechanical device is controlled by the edge server. Each of the edge server supporting information security auditing and the random number generation center node is configured with a log storage function for inputting and outputting information, a log storage function for executing a command, and a function for protecting system information security. The random number generation center node for periodically generating the random number information according to the preset rules is configured with a function for generating data with a time point and a list of random numbers according to a moment when the random number generation center node receives the data, a serial number of the random number generation edge node, a serial number of the transparent container, and the random number generated by the transparent container. The edge server for generating the random number periodically and automatically based on one or more images periodically captured by one or more video surveillance cameras is configured with an artificial intelligence model which is trained using a machine learning system based on a neural network and used for automatically identifying an operating status of the random number generation edge node, as well as related control software codes. The edge server is configured to automatically identify the random number through the artificial intelligence model, the related control software codes and received snapped pictures.

In a second aspect, a method for generating a true random number provided by an embodiment of the present disclosure includes the following steps: generating a random number periodically and automatically by more than one random number generation edge nodes which are made of a transparent material and located in a public place; sending data related to random number generation to a random number generation center node by each random number generation edge node; and periodically generating random number information by the random number generation center node according to the received data and preset rules, and opening the generated random data information to the public. A method for automatically generating the random number by the random number generation edge node includes the following steps: rearranging one or more randomly movable objects in a transparent container randomly through the periodic operation of an electromechanical device; periodically capturing, by one or more video surveillance cameras, pictures of the rearranged randomly movable objects, and sending the pictures to an edge server; automatically identifying, by the edge server, corresponding random numbers according to information of received snapped pictures; sending, by the edge server, the identified random numbers to the random number generation center node; controlling, by the edge server, a display device to display an internal operation situation and an external environment situation of the random number generation edge node, saving video surveillance data, and broadcasting live video to the public. The randomly movable objects include ping-pong balls with numbers printed thereon. A method for periodically operating the electromechanical device includes periodically blowing air to the bottom of the transparent container by the electromechanical device which is connected to an electric fan, a stepping motor, a switch sensor, an electrostatic removing component and a programmable industrial control mainboard to rearrange the randomly movable objects periodically and randomly. The edge server is configured to support information security auditing; and the random number generation center node supports information security auditing, and the electromechanical device is controlled by the edge server. A method for periodically generating the random number information according to the preset rules includes generating data with a time point and a list of random numbers according to a moment when the random number generation center node receives the data, a serial number of the random number generation edge node, a serial number of the transparent container, and the random number generated by the transparent container. A method for automatically identifying random numbers by the edge server according to information of snapped pictures includes the following steps: training an artificial intelligence model for automatically identifying an operating status of the random number generation edge node using a machine learning system based on a neural network; and installing the artificial intelligence model and related control software codes to the edge server, where the edge server is configured to automatically identify random numbers through the artificial intelligence model, the relevant control software codes and the received snapped pictures. A method for supporting the information security auditing includes a log storage function for inputting and outputting information, a log storage function for executing commands, and a function for protecting system information security.

An apparatus and method for generating the true random number provided by the present disclosure have the following beneficial effects: as the housing of the random number generation edge node is made of a transparent material and placed in the public place, and a container in the transparent material for scrolling and rearranging randomly movable objects is also transparent, the display device in the apparatus can display internal and external operating environment situations in real time. The random number generation edge node can provide live streaming service to the public, and the random number generation edge node and the random number generation center node can support the information security audit function. Therefore, by actively visiting and supervising offline and watching live streaming online by participants in the lottery activities at the same time and validating the process of producing the random number seeds online and the process of producing the random number seeds offline in a cross manner, the problems of tampering with random seeds by recorded broadcasting or video fraud can be solved. Then, highly credible and auditable true random numbers can be intuitively generated. Since multiple random number generation edge nodes can be simultaneously deployed in cities in different regions (the cities in different regions do not chare the power networks and the communication networks), and intelligent software and hardware devices are used to generate random numbers automatically and rapidly, no one participates in the operation of the related devices in the whole process, and the true random numbers can be reliably, quickly, massively and neutrally generated for a long time. Since the random number generation center node can provide a true random number seed generation service for all the public by means of a public interface, the random number generation service can be conveniently used at a low cost for a single user.

### Brief Description of the Drawings

The accompanying drawings, which constitute a part of the present disclosure, are used to provide a further understanding of the present disclosure, and the illustrative embodiments of the present disclosure and their descriptions are used to explain the present disclosure, and do not constitute an undue limitation of the present disclosure. In the drawings:
FIG. 1 is a structural diagram of an apparatus according to the present disclosure;
FIG. 2 is a schematic diagram of a random number generation edge node according to the present disclosure;
FIG. 3 is a flow diagram according to the present disclosure;
FIG. 4 is a schematic diagram of a random number generation device according to the present disclosure.

### Detailed Description of Embodiments

To make those skilled in the art understand the technical solutions of the present disclosure better, the technical solutions in the embodiment of the present disclosure will be described clearly and completely with the accompanying drawings in the embodiment of the present disclosure. Apparently, the described embodiments are merely a part rather than all of the embodiments of the present disclosure. All other embodiments obtained by those of ordinary skill in the art based on the embodiments of the present disclosure without creative efforts shall fall within the scope of protection of the present disclosure. The terms "first" and "second" in the specification and claims of the present disclosure and the above accompanying drawings are used to distinguish similar objects, rather than describing a particular order or precedence. It should be understood that the data used can be interchanged under appropriate circumstances, such that the embodiments described herein can be implemented in other orders than those illustrated or described herein. Moreover, the terms "include", "contain" and any other variants mean to cover the non-exclusive inclusion. For example, a process, method, system, product, or device including a series of steps or units is not necessarily limited to those explicitly listed, but may include other steps or units not explicitly listed or inherent to these processes, methods, products, or devices.

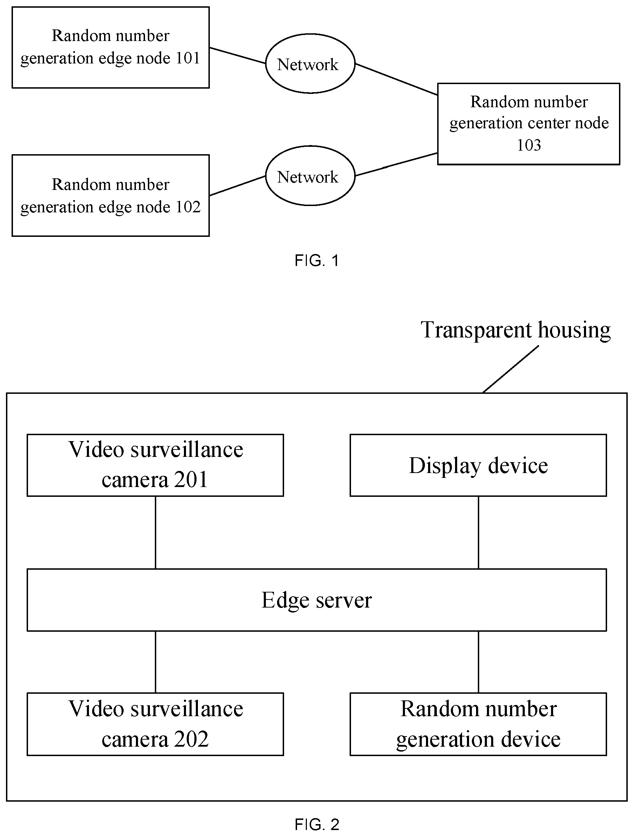

This embodiment provides an apparatus and method for generating a true random number. FIG. 1 is a structural diagram of an apparatus provided by this embodiment. As shown in FIG. 1, the structure diagram includes a random number generation edge node 101 and a random number generation edge node 102 for information transmission and exchange with a random number generation center node 103 through a network.

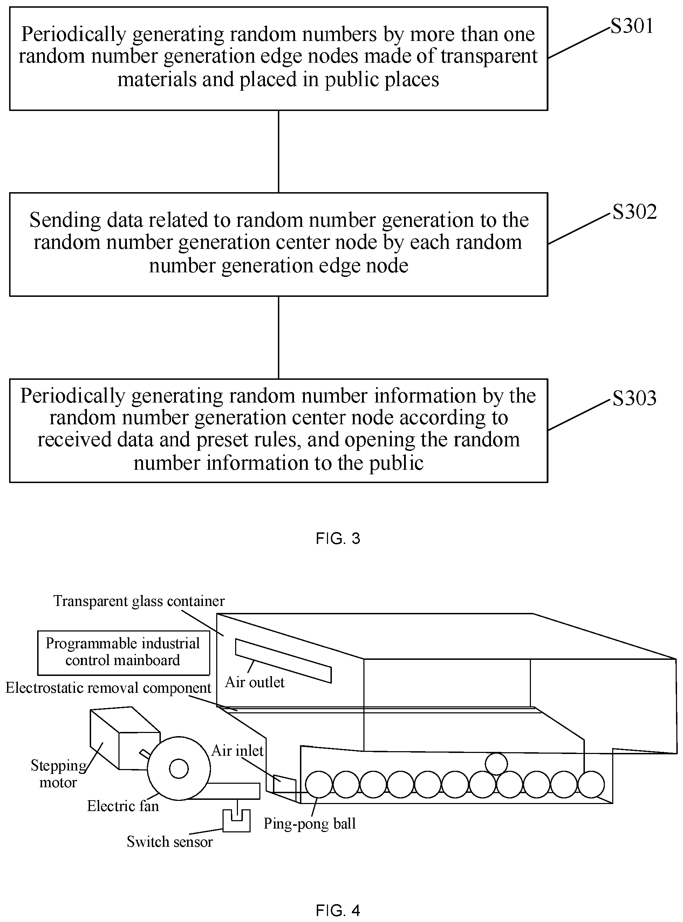

FIG. 2 is a schematic diagram of a random number generation edge node apparatus in FIG. 1. As shown in FIG. 2, the schematic diagram includes a housing of the random number generation edge node made of a transparent glass material, and the housing is sized to be easily placed and displayed in a public place, and it is easy for people in the public place to watch an internal operating situation of the random number edge node. The random number generation edge node internally includes a random number generation device composed of a container customized by transparent glass, 12 ping-pong balls printed with different numbers in the transparent container, an electric fan, a stepping motor, an electrostatic removal component, a switch sensor and a programmable industrial control mainboard (shown in FIG. 4); a video surveillance camera 202 configured to capture an internal operating situation and an external environment situation of the random number generation edge node; a video surveillance camera 201 configured to capture details of random movements of the ping-pong balls; a display device configured to display the internal operating situation and the external environment situation of the random number generation edge node; and an edge server coupled to the video surveillance camera and the display device.

The edge server in FIG. 2 is a general-purpose computer device, which is configured to generate a random number periodically and automatically based on images periodically captured by the video surveillance camera 201, and identify internal and external operating statuses of the random number generation edge node periodically and automatically based on the images periodically captured by the video surveillance camera 202. Software function of automatically identifying random numbers and the internal and external operating statuses of the random number generation edge node according to images is achieved using a mainstream artificial intelligence model trained by a machine learning system based on a neural network in the market, and related control software codes. The method for training the artificial intelligence model includes inputting a proper amount of labels and a large number of pictures with object labels into the machine learning system for training to obtain the artificial intelligence model with an object detection based on the pictures.

The edge server in FIG. 2 is configured to send data to the random number generation center node in FIG. 1 every minute, store video surveillance data 24 hours a day, control the display device, and broadcast a live video to the public. The data sent to the random number generation center node includes: a moment when the random number is identified, a serial number of the random number generation edge node, a serial number of the transparent glass container, the random number generated by the identified transparent glass container with the corresponding serial number, and the BASE64 code corresponding to the identified picture. The content displayed by the display device includes: the random numbers generated every minute, an internal operating status and an external environment status of the random number generation edge node (including live-streaming video information of nearby visitors in video monitoring), and time-sensitive data obtained from the network in real time (e.g., real-time stock trading data and news live-streaming information of authoritative TV stations). The method of broadcasting the live video is achieved by pushing a video stream to a WeChat live video platform using open-source OBS studio software.

The edge server in FIG. 2 is configured to support information security auditing, which is specifically configured with a log storage function for inputting and outputting information, a log storage function for executing a command, and a function for protecting system information security. The function related to information security auditing is achieved through the cooperation of hardware and software on the computer device. The mainstream information security auditing software and hardware in the market can be purchased and installed on the edge server.

As shown in FIG. 4, a container customized by the transparent glass, 12 ping-pong balls printed with different numbers, an electric fan, a stepping motor, an electrostatic removal component, a switch sensor and a programmable industrial control mainboard can be assembled. A bottom groove of the container customized by the transparent glass has a width of 5 cm, a length of 50 cm, and a depth of 10 cm. The middle part of the container customized by the transparent glass forms an included angle of 5 degrees from the horizontal plane, which facilitates the ping-pong balls to slide into the groove. Moreover, a grounded red copper sheet with a width of 1 cm, a length of 50 cm and a height of 0.2 mm is placed on an inner wall of the groove, or at the bottom of the inner wall of the groove , thereby eliminating the static electricity generated by the long-term random movement of the ping-pong balls. The numbers of the ping-pong balls are different, including numbers from 1 to 12. Eighteen identical numbers with the same size are uniformly printed on the same ping-pong ball, such that the number on the ping-pong ball can be captured by the camera no matter how the ping-pong moves. C9003 type miniature brushless centrifugal blower produced by Ningbo Anchor-drive Technology Co., Ltd. is employed as the electric fan. The standard closed-loop 57 type stepping motor on the market is employed as the stepping motor. The fan is fixed to the stepping motor through an optical axis fixing seat. An infrared photoelectric switch sensor is employed as the switch sensor. The programmable industrial control mainboard is configured to: drive the electric fan to blow air to an air inlet at the bottom of the transparent container for 10 seconds at the zero second of every minute, making the ping-pong ball move randomly at an upper part of a leaky-groove shaped transparent glass container; drive the stepping motor to rotate at the 10^{-th} second of every minute, and rotate the electric fan installed on the stepping motor for 30 degrees counterclockwise, thus rapidly cutting off the air from the air inlet of the transparent container; and drive the stepping motor to rotate at the 20^{-th} second of every minute, and rotate the electric fan installed thereon for 30 degrees clockwise, making a tuyere of the electric fan re-aligned with the air inlet of the transparent container to make preparations for random number generation in the next minute cycle. The switch sensor below the fan is used for automatic resetting of the tuyere of the fan after accidental power failure and power supply recovery. The programmable industrial control mainboard can drive the tuyere of the electric fan on the stepping motor to align with the bottom of the transparent container by identifying a switch signal of the switch sensor.

For simplicity of FIG. 2 and FIG. 4 and easy understanding of related technologies by those of ordinary skill in the art, FIG. 2 does not show multiple transparent glass containers and multiple sets of corresponding electromechanical devices. Those skilled in the art of the electromechanical device can achieve the connection of multiple sets of electromechanical devices with reference to FIG. 2 and FIG. 4. In practical application, more than two transparent glass containers and more than two sets of corresponding electromechanical devices need to be configured to ensure the operation reliability of a single random number generation edge node. The edge server in FIG. 2 is configured to control the electromechanical device, including: when the edge server identifies that the ping-pong balls in a transparent glass container with a certain serial number cannot move normally and randomly according to the collected pictures, the electromechanical device with the corresponding serial number is enabled to stop operating by controlling the programmable industrial control mainboard; and when the device with a certain serial number is stopped, it is attempted to start another set of redundant electromechanical device to continue operation.

The random number generation center node 103 in FIG. 1 is configured to receive data from two random number generation edge nodes, generate random number information every minute according to the preset rules, and send the data in JSON format to the public through a HTTPS (Hypertext transfer protocol) communication protocol. The preset rules include generating the random number information according to the sequence of the serial numbers of the random number generation edge nodes and the sequence of the serial numbers of the transparent containers. The random number information includes: a moment when the random number generation center node receives the data, the serial number of the random number generation edge node, the serial number of the transparent container, the random number generated by the transparent container, a sorted list of permutations and combinations of the numbers of the ping-pong balls, a list of decimal coded numbers corresponding to the sorted list of permutations and combinations of the numbers of the ping-pong balls, and the random numerical range.

A method in which the random number generation center node 103 is configured to support the information security auditing in FIG. 1 is similar to the method in which the edge server is configured to support the information security auditing in FIG. 2.

For simplicity of FIG. 2 and FIG. 4 and easy understanding of related technologies by those of ordinary skill in the art, FIG. 2 does not show some necessary but easily inferred device apparatuses and connections, such as a lighting device with reasonable brightness, a power supply device with reasonable power, a cable with a reasonable connection, a network device with a reasonable connection, and a network connection.

In the following, the flow diagram in FIG. 3 and the above apparatus are used to describe how to generate the true random number.

Firstly, as shown in S301 in FIG. 3, a random number generation edge node device apparatus shown in FIG. 2 is placed in a commercial plaza with a large human traffic in Beijing, numbered as 1001, and internally provided with two sets of transparent glass containers and electromechanical devices numbered as 10011 and 10012 respectively. A random number generation edge node apparatus shown in FIG. 2 is placed in a park plaza with a large human traffic in Shanghai, numbered as 2001, and internally provided with two sets of funnel-shaped transparent glass containers and electromechanical devices numbered as 20011 and 20012, respectively. At 19: 02: 00 on April 17th, 2022, electric fans of four sets of random number generation devices blow air into the bottom air inlets of their respective transparent containers at the same time, making the ping-pong balls in the transparent glass moved randomly for 10 seconds. At 19: 02: 10 on April 17th, 2022, the electric fans of the four sets of random number generation devices are moved counterclockwise for 30 degrees at the same time, thus stopping the air inlets at the bottoms of the transparent containers and rearranging four sets of ping-pong balls in the transparent glass to the bottoms of the transparent glass containers. At 19: 02: 20 on April 17th, 2022, the electric fans of the four sets of random number generation devices are moved clockwise for 30 degrees at the same time at the same time, and the video surveillance camera 201 in FIG. 2 is configured to send a picture snapped at this time to the edge server.

As shown in S302 in FIG. 3, the edge server in the random number generation edge node numbered as 1001 sends the random number information in JSON data format automatically identified and generated by artificial intelligence to the random number generation center node deployed in Alibaba Cloud through HTTPS communication protocol at 19: 02: 22 on April 17th, 2022. The content of the random number information is as follows: {"nodeNo":"1001","time":"2022-04-17-19-02","datas":[{"genNo":"10011","pingpongNo":"100107020809110504031206","img":"base64form atlmg-01-moreDataNotShow"},{"genNo":"10012","pingpongNo":"040305100711020809010612","img":"ba se64formatlmg-02-moreDataNotShow"}]}. The edge server in the random number generation edge node numbered as 1002 sends the random number information in JSON data format automatically identified and generated by artificial intelligence to the random number generation center node deployed in Alibaba Cloud through HTTPS communication protocol at 19: 02: 23 on April 17th, 2022. The content of the random number information is as follows: {"nodeNo":"1002","time":"2022-04-17-19-02", "datas":[{"genNo":"20011", "pingpongNo":"07081202051 0030911 040601 ", "img":"base64form atlmg-03-moreDataNotShow"},{"genNo":"20012","pingpongNo":"090501070612020310041108","img":"ba se64formatimg-04-moreDataNotShow"}]}.

As shown in S302 in FIG. 3, the random number generation center node generates random number information from the received data according to the sequence of the serial numbers of the edge nodes and the serial numbers of the containers. The content of the random number information is as follows: {"time":"2022-04-17-19-02","pingpongNos":["100107020809110504031206","040305100711020809010612","07081202 0510030911040601","090501070612020310041108"],"randomNos":["361089176","127994581", "264598774", "334030334"], "maxValue":479001599, "nodes":[{"nodeNo":"1 001", "time": "2022-04-17-19-02", "datas": [{"genNo":" 1 0011", "pingpongNo":"1 00107020809110504031206", "img":"base64form atlmg-01-moreDataNotShow"},{"genNo":"10012","pingpongNo":"040305100711020809010612","img":"ba se64formatlmg-02-moreDataNotShow"}]},{"nodeNo":"1002","time":"2022-04-17-19-02", "datas":[{"genNo":"20011", "pingpongNo":"07081202051 0030911 040601 ", "img":"base64form atlmg-03-moreDataNotShow"},{"genNo":"20012","pingpongNo":"090501070612020310041108","img":"ba se64formatlmg-04-moreDataNotShow"}]}]}. PingpongNos field is the sorted list of permutations and combinations of the numbers of the ping-pong balls, randomNos field is a list of decimal coded numbers corresponding to the sorted list of permutations and combinations of the numbers of the ping-pong balls, and maxValue field is the maximum possible range of the random numbers starting from 0. The method for converting the number permutation of the ping-pong balls into a corresponding decimal code includes defining the number permutation of the ping-pong balls from 1 ascending to 12 as decimal code 0, and defining the number permutation of the ping-pong balls from 12 descending to 1 as decimal code 479001599, and calculating various combinations as the corresponding decimal codes through the permutation and combination methods and computer algorithm. For example, a ping-pong ball permutation 100107020809110504031206 can be divided into 12 segments, and the number of permutations and combinations between the segments can be calculated respectively, and finally added. All permutations between 010203040506070809101112 (inclusive) and 100102030405060708091112 (exclusive) may be 359251200=(10-1)*11*10*9*8*7*6*5*4*3*2. All permutations between 100102030405060708091112 (inclusive) and 100102030405060708091112 (exclusive) may be 0=(1-0-1)*10*9*8*7*6*5*4*3*2. All permutations between 100102030405060708091112 (inclusive) and 100107020304050608091112 (exclusive) may be 1814400=(7-1-1)*9*8*7*6*5*4*3*2. All permutations between 100107020304050608091112 (inclusive) and 100107020304050608091112 (exclusive) may be 0=(2-1-1)*8*7*6*5*4*3*2. All permutations between 100107020304050608091112 (inclusive) and 100107020803040506091112 (exclusive) may be 20160=(8-3-1)*7*6*5*4*3*2. All permutations between 100107020803040506091112 (inclusive) and 100107020809030405061112 (exclusive) may be 2880=(9-4-1)*6*5*4*3*2. All permutations between 100107020809030405061112 (inclusive) and 100107020809110304050612 (exclusive) may be 480=(11-6-1)*5*4*3*2. All permutations between 100107020809110304050612 (inclusive) and 100107020809110503040612 (exclusive) may be 48=(5-2-1)*4*3*2. All permutations between 100107020809110503040612 (inclusive) and 100107020809110504030612 (exclusive) may be 6=(4-2-1) *3*2. All permutations between 100107020809110504030612 (inclusive) and 100107020809110504030612 (exclusive) can be 0=(3-2-1)*2. All permutations between 100107020809110504030612 (inclusive) and 100107020809110504031206 (exclusive) may be 1=(12-10-1). All permutations between 100107020809110504031206 (inclusive) and 100107020809110504031206 (inclusive) may be 1=6-5, and finally, all permutations may be 361089176=359251200+0+1814400+0+20160+2880+480+48+6+0+1+1. In addition, multiple identical numbers with the same size should be printed on the same ping-pong ball such that the camera can identify the number on the ping-pong ball. The public can obtain the random number information in JSON format at 19: 02: 30 on April 17th, 2022 through the HTTPS communication protocol and the preset network address.

At 19: 03: 00 on April 17th, 2022, a new cycle is started. The random number generation edge node automatically rearranges the ping-pong balls through the random number generation device, and the edge server automatically identifies the generated random numbers based on the pictures snapped at 19: 03: 20 on April 17th, 2022 and sends the generated random numbers to the random number generation center node. The random number generation center node generates the latest random number information according to the preset rules and open the random number information to the public. Therefore, the true random numbers used for lottery or sweepstake are continuously generated in a cycle every minute.

In addition, it should be noted that the above functions of storing the video surveillance data, broadcasting the live video to the public, displaying the content of the display device, auditing the information security, and opening a network random number query interface to the public operate 24 hours a day and are not affected by the above processes. Specific method for live-streaming the videos and displaying the content by the display device have been described when describing the apparatus 20, and thus will not be described in detail here. The function of information security audit is mainly to protect the data security of random number generation edge node and random number generation center node, prevent illegal network access and attacks, and facilitate the public security and judicial departments for evidence collection and auditing.

A method for using the generated true random number seeds for lottery or sweepstake includes: storing the information such as the list of people participating in lottery or sweepstake, the number of winners or prize setting, information of a moment when random number seeds are generated in the future, an algorithm for generating lottery or sweepstake results, etc. in the a blockchain system in advance; and when the random number seeds at a specified time point are generated, generating a highly credible lottery or sweepstake result using the information stored in the blockchain system.

The above embodiments are only preferred embodiments of the present disclosure, and are not intended to limit the present disclosure. limiting. It should be noted that although the present disclosure has been described in detail with reference to the foregoing embodiments, those of ordinary skill in the art should understand that it is still possible to modify the technical solutions described in the foregoing embodiments, or to replace some or all technical features with equivalents. However, these modifications or replacements do not make the essence of the corresponding technical solutions deviate from the scope of the technical solutions of various embodiments of the present disclosure.

## Claims

1. An apparatus for generating a random number, comprising more than one random number generation edge nodes, and one random number generation center node;
wherein a housing of each random number generation edge node is made of a transparent material and placed in a public place, and internally comprises more than one transparent containers; one or more randomly movable objects arranged in the transparent container; an electromechanical device configured to control the randomly movable objects periodically; one or more video surveillance cameras configured to capture an internal operation situation and an external environment situation of the random number generation edge node; one or more display devices configured to display the internal operation situation and the external environment situation of the random number generation edge node; and an edge server coupled to the one or more video surveillance cameras and the one or more display devices, wherein the edge server is configured to generate random numbers automatically and periodically based on one or more images periodically captured by the one or more video surveillance cameras, automatically identify internal and external operation situations of the random number generation edge node, send data to the random number generation center node, save video surveillance data, control the one or more display devices, and broadcast live video to the public
and
the random number generation center node is configured to receive data of more than one random number generation edge nodes, periodically generate random number information according to preset rules, and open the generated random number information to the public.

2. The apparatus according to claim 1, wherein the randomly movable objects comprise ping-pong balls with numbers printed thereon; the electromechanical device comprises an electric fan, a stepping motor, a switch sensor, an electrostatic removal component, and a programmable industrial control mainboard; the electromechanical device is configured to rearrange the randomly movable objects periodically and randomly by blowing air to the bottom of the transparent container; the edge server is configured to support information security auditing; and the random number generation center node is configured to support the information security auditing, and the electromechanical device is connected to the edge server.

3. The apparatus according to claim 2, wherein each of the edge server supporting information security auditing and the random number generation center node is configured with a log storage function for inputting and outputting information, a log storage function for executing a command, and a function for protecting system information security.

4. The apparatus according to claim 1, wherein the random number generation center node for periodically generating the random number information according to the preset rules is configured with a function for generating data with a time point and a list of random numbers according to a moment when the random number generation center node receives the data, a serial number of the random number generation edge node, a serial number of the transparent container, and the random number generated by the transparent container.

5. The apparatus according to claim 1, wherein the edge server for generate the random number periodically and automatically based on the one or more images periodically captured by the one or more video surveillance cameras is configured with an artificial intelligence model which is trained using a machine learning system based on a neural network and used for automatically identifying an operating status of the random number generation edge node, as well as related control software codes; and the edge server is configured with a function for automatically identifying the random number through the artificial intelligence model, the related control software codes and received snapped pictures.

6. A method for generating a true random number, comprising the following steps: generating a random number periodically and automatically by more than one random number generation edge nodes which are made of a transparent material and located in a public place; sending data related to random number generation to a random number generation center node by each random number generation edge node; and periodically generating random number information by the random number generation center node according to the received data and preset rules, and opening the generated random data information to the public;
a method for automatically generating the random number by the random number generation edge node comprises the following steps: rearranging one or more randomly movable objects in a transparent container randomly through the periodic operation of an electromechanical device; periodically capturing, by one or more video surveillance cameras, pictures of the rearranged randomly movable objects, and sending the pictures to an edge server; automatically identifying, by the edge server, corresponding random numbers according to information of received snapped pictures; sending, by the edge server, the identified random numbers to the random number generation center node; controlling, by the edge server, a display device to display an internal operation situation and an external environment situation of the random number generation edge node, saving video surveillance data, and broadcasting live video to the public.

7. The method according to claim 6, wherein the randomly movable objects comprise ping-pong balls with numbers printed thereon; a method for periodically operating the electromechanical device comprises periodically blowing air to the bottom of the transparent container by the electromechanical device which is connected to an electric fan, a stepping motor, a switch sensor, an electrostatic removing component and a programmable industrial control mainboard to rearrange the randomly movable objects periodically and randomly; the edge server is configured to support information security auditing; and the random number generation center node supports information security auditing, and the electromechanical device is controlled by the edge server.

8. The method according to claim 6, wherein a method for periodically generating the random number information according to the preset rules comprises generating data with a time point and a list of random numbers according to a moment when the random number generation center node receives the data, a serial number of the random number generation edge node, a serial number of the transparent container, and the random number generated by the transparent container.

9. The method according to claim 6, wherein a method for automatically identifying random numbers by the edge server according to information of snapped pictures comprises the following steps: training an artificial intelligence model for automatically identifying an operating status of the random number generation edge node using a machine learning system based on a neural network; and installing the artificial intelligence model and related control software codes to the edge server, wherein the edge server is configured to automatically identify random numbers through the artificial intelligence model, the relevant control software codes and the received snapped pictures.

10. The method according to claim 7, wherein a method for supporting the information security auditing comprises a log storage function for inputting and outputting information, a log storage function for executing a command, and a function for protecting system information security.

## Patentansprüche

1. Vorrichtung zum Erzeugen einer Zufallszahl, umfassend mehr als einen Randknoten zur Erzeugung von Zufallszahlen und einen Zentralknoten zur Erzeugung von Zufallszahlen, wobei
das Gehäuse jedes Randknotens zur Erzeugung von Zufallszahlen aus einem transparenten Material hergestellt und an einem öffentlichen Ort angeordnet ist und im Inneren Folgendes aufweist: mehr als einen transparenten Behälter; ein oder mehrere zufällig bewegliche Objekte, die in dem transparenten Behälter angeordnet sind; eine elektromechanische Vorrichtung, die dazu konfiguriert ist, die zufällig beweglichen Objekte periodisch zu steuern; eine oder mehrere Videoüberwachungskameras, die dazu konfiguriert sind, einen internen Betriebszustand und eine externe Umgebungssituation des Randknotens zur Erzeugung von Zufallszahlen aufzunehmen; eine oder mehrere Anzeigevorrichtungen, die dazu konfiguriert sind, den internen Betriebszustand und die externe Umgebungssituation des Randknotens zur Erzeugung von Zufallszahlen anzuzeigen; und einen Edge-Server, der mit der einen oder den mehreren Videoüberwachungskameras und dem einen oder den mehreren Anzeigegeräten gekoppelt ist, wobei der Edge-Server dazu konfiguriert ist, automatisch und periodisch Zufallszahlen basierend auf einem oder mehreren periodisch von der einen oder den mehreren Videoüberwachungskameras aufgenommenen Bildern zu erzeugen, interne und externe Betriebssituationen des Randknotens zur Erzeugung von Zufallszahlen automatisch zu identifizieren, Daten an den Zentralknoten zur Erzeugung von Zufallszahlen zu senden, Videoüberwachungsdaten zu speichern, die eine oder die mehreren Anzeigevorrichtungen zu steuern und Live-Video öffentlich zu übertragen; und
wobei der Zentralknoten zur Erzeugung von Zufallszahlen dazu konfiguriert ist, Daten von mehr als einem Randknoten zur Erzeugung von Zufallszahlen zu empfangen, periodisch Zufallszahleninformationen gemäß vorgegebenen Regeln zu generieren und die generierten Zufallszahleninformationen öffentlich zugänglich zu machen.

2. Vorrichtung nach Anspruch 1, wobei die zufällig beweglichen Objekte Tischtennisbälle mit darauf aufgedruckten Zahlen umfassen; die elektromechanische Vorrichtung einen elektrischen Ventilator, einen Schrittmotor, einen Schaltsensor, eine elektrostatische Entfernungskomponente und eine programmierbare industrielle Steuerungshauptplatine umfasst; die elektromechanische Vorrichtung dazu konfiguriert ist, die zufällig beweglichen Objekte durch Blasen von Luft zum Boden des transparenten Behälters hin periodisch und zufällig neu anzuordnen; der Edge-Server dazu konfiguriert ist, Informationssicherheitsaudits zu unterstützen; und der Zentralknoten zur Erzeugung von Zufallszahlen dazu konfiguriert ist, die Informationssicherheitsaudits zu unterstützen, und die elektromechanische Vorrichtung mit dem Edge-Server verbunden ist.

3. Vorrichtung nach Anspruch 2, wobei jeder der den Informationssicherheitsaudits unterstützenden Edge-Server und der Zentralknoten zur Erzeugung von Zufallszahlen mit einer Protokollspeicherfunktion zum Eingeben und Ausgeben von Informationen, einer Protokollspeicherfunktion zur Ausführung eines Befehls und einer Funktion zum Schutz der Informationssicherheit des Systems konfiguriert ist.

4. Vorrichtung nach Anspruch 1, wobei der Zentralknoten zur Erzeugung von Zufallszahlen für die periodische Generierung der Zufallszahleninformationen gemäß den voreingestellten Regeln mit einer Funktion zur Erzeugung von Daten mit einem Zeitpunkt und einer Liste von Zufallszahlen konfiguriert ist, und zwar gemäß einem Zeitpunkt, zu dem der Zentralknoten zur Erzeugung von Zufallszahlen die Daten empfängt, einer Seriennummer des Randknotens zur Erzeugung von Zufallszahlen, einer Seriennummer des transparenten Behälters und der durch den transparenten Behälter erzeugten Zufallszahl.

5. Vorrichtung nach Anspruch 1, wobei der Edge-Server zum periodischen und automatischen Erzeugen der Zufallszahlen basierend auf den ein oder mehreren periodisch von den ein oder mehreren Videoüberwachungskameras erfassten Bildern mit einem künstlichen Intelligenzmodell konfiguriert ist, das unter Verwendung eines maschinellen Lernsystems auf Basis eines neuronalen Netzwerks trainiert und zur automatischen Identifizierung eines Betriebsstatus des Randknotens zur Erzeugung von Zufallszahlen sowie zugehöriger Steuerungssoftwarecodes verwendet wird; und der Edge-Server mit einer Funktion zur automatischen Identifizierung der Zufallszahlen durch das künstliche Intelligenzmodell, die zugehörigen Steuerungssoftwarecodes und empfangene Schnappschüsse konfiguriert ist.

6. Verfahren zum Erzeugen einer echten Zufallszahl, umfassend die folgenden Schritte: periodisches und automatisches Erzeugen einer Zufallszahl durch mehr als einen aus einem transparenten Material hergestellten und an einem öffentlichen Ort befindlichen Randknoten zur Erzeugung von Zufallszahlen; Senden von mit der Zufallszahlerzeugung zusammenhängenden Daten an einen Zentralknoten zur Erzeugung von Zufallszahlen durch jeden Randknoten zur Erzeugung von Zufallszahlen; periodisches Erzeugen von Zufallszahlinformationen durch den Zentralknoten zur Erzeugung von Zufallszahlen gemäß den empfangenen Daten und voreingestellten Regeln sowie Offenlegen der erzeugten Zufallsdateninformationen gegenüber der Öffentlichkeit,
wobei das automatische Erzeugen der Zufallszahl durch den Randknoten zur Erzeugung von Zufallszahlen die folgenden Schritte umfasst: zufälliges Neuordnen eines oder mehrerer zufällig beweglicher Objekte in einem transparenten Behälter durch den periodischen Betrieb einer elektromechanischen Vorrichtung; periodisches Erfassen von Bildern der neu angeordneten zufällig beweglichen Objekte durch eine oder mehrere Videoüberwachungskameras und Senden der Bilder an einen Edge-Server; automatisches Identifizieren entsprechender Zufallszahlen durch den Edge-Server anhand von Informationen empfangener aufgenommener Bilder; Senden der identifizierten Zufallszahlen durch den Edge-Server an den Zentralknoten zur Erzeugung von Zufallszahlen; sowie Steuern einer Anzeigevorrichtung durch den Edge-Server zum Anzeigen einer inneren Betriebssituation und einer äußeren Umgebungssituation des Randknotens zur Erzeugung von Zufallszahlen, Speichern von Videoüberwachungsdaten und Übertragen von Live-Video an die Öffentlichkeit.

7. Verfahren nach Anspruch 6, **dadurch gekennzeichnet, dass** die zufällig beweglichen Objekte Tischtennisbälle mit darauf aufgedruckten Zahlen umfassen, ein Verfahren zum periodischen Betreiben der elektromechanischen Vorrichtung periodisches Blasen von Luft zum Boden des transparenten Behälters hin durch die elektromechanische Vorrichtung, die mit einem elektrischen Lüfter, einem Schrittmotor, einem Schaltersensor, einer Komponente zum Entfernen elektrostatischer Aufladung und einer programmierbaren industriellen Steuerungs-Hauptplatine verbunden ist, zum periodischen und zufälligen Neuordnen der zufällig beweglichen Objekte umfasst, der Edge-Server dazu eingerichtet ist, ein Informationssicherheitsaudit zu unterstützen, der Zentralknoten zur Erzeugung von Zufallszahlen das Informationssicherheitsaudit unterstützt und die elektromechanische Vorrichtung durch den Edge-Server gesteuert wird.

8. Verfahren nach Anspruch 6, **dadurch gekennzeichnet, dass** ein Verfahren zum periodischen Erzeugen der Zufallszahlinformationen gemäß den voreingestellten Regeln das Erzeugen von Daten umfasst, die einen Zeitpunkt und eine Liste von Zufallszahlen enthalten, wobei die Daten auf der Grundlage des Zeitpunkts, zu dem der Zentralknoten zur Erzeugung von Zufallszahlen die Daten empfängt, der Seriennummer des Randknotens zur Erzeugung von Zufallszahlen, der Seriennummer des transparenten Behälters und der von dem transparenten Behälter erzeugten Zufallszahl erzeugt werden.

9. Verfahren nach Anspruch 6, **dadurch gekennzeichnet, dass** ein Verfahren zum automatischen Identifizieren von Zufallszahlen durch den Edge-Server anhand von Informationen aufgenommener Bilder die folgenden Schritte umfasst: Trainieren eines Modells künstlicher Intelligenz zum automatischen Identifizieren eines Betriebszustands des Randknotens zur Erzeugung von Zufallszahlen unter Verwendung eines auf einem neuronalen Netzwerk basierenden maschinellen Lernsystems; und Installieren des Modells künstlicher Intelligenz und zugehöriger Steuerungs-Softwarecodes auf dem Edge-Server, wobei der Edge-Server dazu eingerichtet ist, Zufallszahlen anhand des Modells künstlicher Intelligenz, der zugehörigen Steuerungs-Softwarecodes und der empfangenen aufgenommenen Bilder automatisch zu identifizieren.

10. Verfahren nach Anspruch 7, wobei ein Verfahren zur Unterstützung des Informationssicherheitsaudits eine Protokollspeicherfunktion zum Eingeben und Ausgeben von Informationen, eine Protokollspeicherfunktion zur Ausführung eines Befehls und eine Funktion zum Schutz der Informationssicherheit des Systems umfasst.

## Revendications

1. Appareil de génération d'un nombre aléatoire, comprenant plus d'un nœud périphérique de génération de nombre aléatoire, et un nœud central de génération de nombre aléatoire ;
dans lequel un boîtier de chaque nœud périphérique de génération de nombre aléatoire est réalisé d'un matériau transparent et placé à un lieu public, et comprend à son intérieur plus d'un conteneur transparent ; un ou plusieurs objets aléatoirement mobiles disposés dans le conteneur transparent ; un dispositif électromécanique configuré pour commander périodiquement les objets aléatoirement mobiles ; une ou plusieurs caméras de surveillance vidéo configurées pour capturer une situation de fonctionnement intérieur et une situation d'environnement extérieur du nœud périphérique de génération de nombre aléatoire ; un ou plusieurs dispositifs d'affichage configurés pour afficher la situation de fonctionnement intérieur et la situation d'environnement extérieur du nœud périphérique de génération de nombre aléatoire ; et un serveur périphérique couplé à les une ou plusieurs caméras de surveillance vidéo et à les un ou plusieurs dispositifs d'affichage, dans lequel le serveur périphérique est configuré pour générer automatiquement et périodiquement des nombres aléatoires sur la base d'une ou plusieurs images capturées périodiquement par les une ou plusieurs caméras de surveillance vidéo, identifier automatiquement des situations de fonctionnement intérieur et extérieur du nœud périphérique de génération de nombre aléatoire, envoyer des données au nœud central de génération de nombre aléatoire, sauvegarder des données de surveillance vidéo, commander les un ou plusieurs dispositifs d'affichage, et diffuser des vidéos en direct au public ; et
le nœud central de génération de nombre aléatoire est configuré pour recevoir des données de plus d'un nœud périphérique de génération de nombre aléatoire, générer périodiquement des informations de nombre aléatoire selon des règles prédéfinies, et rendre publiques les informations de nombre aléatoire généré.

2. Appareil selon la revendication 1, dans lequel les objets aléatoirement mobiles comprennent des balles de ping-pong sur lesquelles sont imprimés des numéros ; le dispositif électromécanique comprend un ventilateur électrique, un moteur pas à pas, un capteur de commutateur, un composant anti-électrostatique, et une carte mère de commande industrielle programmable ; le dispositif électromécanique est configuré pour réarranger périodiquement et aléatoirement les objets aléatoirement mobiles en soufflant de l'air au fond du conteneur transparent ; le serveur périphérique est configuré pour supporter un audit de sécurité d'informations ; et le nœud central de génération de nombre aléatoire est configuré pour supporter l'audit de sécurité d'informations, et le dispositif électromécanique est connecté au serveur périphérique.

3. Appareil selon la revendication 2, dans lequel chacun du serveur périphérique supportant un audit de sécurité d'informations et du nœud central de génération de nombre aléatoire est configuré d'une fonction de stockage de journaux pour l'entrée et la sortie d'informations, une fonction de stockage de journaux pour l'exécution d'une commande, et une fonction de protection de la sécurité d'information de système.

4. Appareil selon la revendication 1, dans lequel le nœud central de génération de nombre aléatoire destiné à générer périodiquement les informations de nombre aléatoire selon les règles prédéfinies est configuré d'une fonction de génération de données avec un point temporel et une liste de nombres aléatoires selon un moment où le nœud central de génération de nombre aléatoire reçoit les données, un numéro de série du nœud périphérique de génération de nombre aléatoire, un numéro de série du conteneur transparent, et le nombre aléatoire généré par le conteneur transparent.

5. Appareil selon la revendication 1, dans lequel le serveur périphérique pour générer périodiquement et automatiquement le nombre aléatoire sur la base des une ou plusieurs images capturées périodiquement par les une ou plusieurs caméras de surveillance vidéo est configuré d'un modèle d'intelligence artificielle qui est entraîné en utilisant un système d'apprentissage automatique sur la base d'un réseau neuronal et utilisé pour identifier automatiquement un état de fonctionnement du nœud périphérique de génération de nombre aléatoire, ainsi que des codes logiciels de commande associés ; et le serveur périphérique est configuré d'une fonction pour identifier automatiquement le nombre aléatoire à travers le modèle d'intelligence artificielle, les codes logiciels de commande associés et les images capturées reçues.

6. Procédé de génération d'un nombre véritablement aléatoire, comprenant les étapes suivantes : générer automatiquement et périodiquement un nombre aléatoire par plus d'un nœud périphérique de génération de nombre aléatoire qui sont réalisés d'un matériau transparent et placés à un lieu public ; envoyer des données liées à la génération de nombre aléatoire à un nœud central de génération de nombre aléatoire par chaque nœud périphérique de génération de nombre aléatoire ; et générer périodiquement des informations de nombre aléatoire par le nœud central de génération de nombre aléatoire selon les données reçues et des règles prédéfinies, et rendre publiques les informations de nombre aléatoire généré ;
un procédé de génération automatique du nombre aléatoire par le nœud périphérique de génération de nombre aléatoire comprend les étapes suivantes : réarranger aléatoirement un ou plusieurs objets aléatoirement mobiles dans un conteneur transparent à travers le fonctionnement périodique d'un dispositif électromécanique ; capturer périodiquement, par une ou plusieurs caméras de surveillance vidéo, des images des objets aléatoirement mobiles réarrangés, et envoyer les images à un serveur périphérique ; identifier automatiquement, par le serveur périphérique, des nombres aléatoires correspondants selon des informations des images capturées reçues ; envoyer, par le serveur périphérique, les nombres aléatoires identifiés au nœud central de génération de nombre aléatoire ; commander, par le serveur périphérique, un dispositif d'affichage à afficher une situation de fonctionnement intérieur et une situation d'environnement extérieur du nœud périphérique de génération de nombre aléatoire, sauvegarder des données de surveillance vidéo, et diffuser des vidéos en direct au public.

7. Procédé selon la revendication 6, dans lequel les objets aléatoirement mobiles comprennent des balles de ping-pong sur lesquelles sont imprimés des numéros ; un procédé pour faire fonctionner périodiquement le dispositif électromécanique comprend un soufflage périodique de l'air au fond du récipient transparent par le dispositif électromécanique qui est connecté à un ventilateur électrique, un moteur pas à pas, un capteur de commutateur, un composant anti-électrostatique, et une carte mère de commande industrielle programmable, afin de réarranger périodiquement et aléatoirement les objets aléatoirement mobiles ; le serveur périphérique est configuré pour supporter un audit de sécurité d'informations ; et le nœud central de génération de nombre aléatoire est configuré pour supporter l'audit de sécurité d'informations, et le dispositif électromécanique est commandé par le serveur périphérique.

8. Procédé selon la revendication 6, dans lequel un procédé pour générer périodiquement les informations de nombre aléatoire selon les règles prédéfinies comprend une génération de données avec un point temporel et une liste de nombres aléatoires selon un moment où le nœud central de génération de nombre aléatoire reçoit les données, un numéro de série du nœud périphérique de génération de nombre aléatoire, un numéro de série du conteneur transparent, et le nombre aléatoire généré par le conteneur transparent.

9. Procédé selon la revendication 6, dans lequel un procédé pour identifier automatiquement des nombres aléatoires par le serveur périphérique selon des informations des images capturées comprend les étapes suivantes : entraîner un modèle d'intelligence artificielle pour identifier automatiquement un état de fonctionnement du nœud périphérique de génération de nombre aléatoire en utilisant un système d'apprentissage automatique sur la base d'un réseau neuronal ; et installer le modèle d'intelligence artificielle et des codes logiciels de commande associés au serveur périphérique, dans lequel le serveur périphérique est configuré pour identifier automatiquement des nombres aléatoires à travers le modèle d'intelligence artificielle, les codes logiciels de commande associés et les images capturées reçues.

10. Procédé selon la revendication 7, dans lequel un procédé pour supporter l'audit de sécurité d'informations comprend une fonction de stockage de journaux pour l'entrée et la sortie d'informations, une fonction de stockage de journaux pour l'exécution d'une commande, et une fonction de protection de la sécurité d'information de système.
